# EUROPÄISCHE PATENTSCHRIFT

(11) **EP 4 288 245 B1**
(45) Veröffentlichungstag und Bekanntmachung des Hinweises auf die Patenterteilung: **26.03.2025**
(21) Anmeldenummer: 22703352.9
(22) Anmeldetag: 02.02.2022
(51) Int. Cl.: B23Q 11/08

(54) **SCHUTZABDECKUNG MIT EINEM FALTENBALG UND DARAN FESTGELEGTEN LAMELLEN**
PROTECTIVE COVER HAVING A BELLOWS AND PLATES FASTENED THERETO
COUVERCLE DE PROTECTION COMPORTANT UN SOUFFLET ET DES PLAQUES FIXÉES À CELUI-CI

(30) Priorität: 04.02.2021 DE 102021102662
(43) Veröffentlichungstag der Anmeldung: 13.12.2023
(73) Patentinhaber: HEMA Maschinen- und Apparateschutz GmbH, 63500 Seligenstadt (DE)
(72) Erfinder: HEIDRICH, Lukas, 63500 Seligenstadt (DE); HEBERER, Jürgen, 63500 Seligenstadt (DE); MAY, Matthias, 63500 Seligenstadt (DE)
(74) Vertreter: Boult Wade Tennant LLP
(86) Internationale Anmeldenummer: PCT/EP2022/052402
(87) Internationale Veröffentlichungsnummer: WO 2022/167446

(56) Entgegenhaltungen:
- DE-A1- 102013 210 407
- DE-U1- 202015 001 696

## Beschreibung

Die Erfindung betrifft gemäß dem Oberbegriff von Anspruch 1 eine längenvariable Schutzabdeckung mit wenigstens einem Faltenbalgelement, bei welchem eine bestimmte Anzahl von Falten als Zwischenfalten und die übrigen Falten als frei ausziehbare Falten ausgebildet sind, indem zur Bildung der Zwischenfalten jeweils zwei benachbarte Lagen des Faltenbalgelements miteinander verbunden sind, wobei zwischen diesen Lagen in den als Taschen ausgebildeten Zwischenfalten Schenkel von L-förmigen Lamellen oder von anderen Trageelementen festgelegt sind, wobei die Schenkel Ausnehmungen aufweisen, die zur Festlegung an dem Faltenbalgelement dienen (siehe z.B. DE 20 2015 001696 U1).

Für die Schutzfunktion eines Faltenbalges z.B. innerhalb von Werkzeugmaschinen stellt die Bestückung mit vorzugsweise aus Stahl bestehenden Lamellen eine wesentliche Verbesserung der mechanischen Beständigkeit auch in härtesten Einsatzszenarien dar. Diese Stahllamellen müssen mit den einzelnen Falten des Balgkörpers so verbunden werden, dass der maximale Auszug und das Blockmaß des Faltenbalges möglichst wenig beeinträchtigt werden. Zudem dürfen die Anbindungspunkte selbst den Balgkörper in der Bewegung nicht beschädigen. Auch sollten die Verbindungsstellen keine Perforation des Balgkörpers hervorrufen, so dass eine weitest mögliche Dichtigkeit gegenüber der im Arbeitsraum der Maschine genutzten Kühlschmierstoffe besteht. Für eine einwandfreie Funktion des Faltenbalges ist es zudem unablässig, dass die angebrachten Stahllamellen mit einer ausreichend großen Vorspannung gegeneinandergedrückt werden und so keine Späne etc. hinter die Stahllamellen gelangen können.

Eine längenvariable Schutzabdeckung der eingangs genannten Art ist aus der DE 10 2016 103 985 A1 bekannt. Dort wird eine Ausführungsform beschrieben, bei welcher ein Lamellenschenkel mit einer L-förmigen Ausnehmung in einer Zwischenfalte eines Faltenbalgelements an dort angeordneten, die Faltenlagen verbindenden Halteelementen eingehängt sind. ES besteht die Schwierigkeit, die Haltelemente in den Zwischenlagen anzuordnen, was in der Regel nur durch zusätzliche formschlüssige Elemente, wie z.B. Nieten möglich ist, die die Faltenbalglagen durchstoßen und damit deren Schutzfunktion vor dem Durchdringen von Flüssigkeit beeinträchtigen. Die Halteelemente führen auch zu einer Vergrößerung des Blockmaßes.

Eine weitere Schutzabdeckung ist aus der DE 10 2013 210 407 A1 bekannt. Dort sind alle Falten in der Nähe der Knickstelle mit den Schenkeln der Lamelle vernietet. Dadurch wird die Auszuglänge im Verhältnis zur minimalen Blocklänge deutlich eingeschränkt.

Die JP 2007-144534 A zeigt schließlich eine Schutzabdeckung, bei welcher die Lamellen über Federklammern verbunden und in Position zueinander gehalten sind. Ergänzend ist ein Faltenbalg vorgesehen, der an Zwischenfalten mittels Nieten und gesonderten beidseitigen Halteplatten festgelegt ist. Diese Lösung sorgt für eine sehr gute Ausrichtung der Lamellen, vergrößert aber ebenfalls die Blocklänge und auch das Gewicht Schutzabdeckung erheblich, was wiederum deren dynamisches Verhalten beeinträchtigt.

Die WO2019/215191 A1 zeigt eine Schutzabdeckung, bei welcher die überlappenden Lamellen auf der Seite der Faltung der Zwischenfalten liegen und nicht von der offenen Seite in die Taschen eingesteckt sind.

Die Aufgabe der vorliegenden Erfindung besteht darin, eine Schutzabdeckung zu schaffen, die einen sicheren Verbund der Lamellen mit dem Balgkörper bei geringem Eigengewicht und einfacher Herstellbarkeit ermöglicht.

Erfindungsgemäß wird die Aufgabe durch eine Schutzabdeckung der eingangs genannten Art gelöst, bei welcher die beiden Lagen der Zwischenfalten Verbindungsbereiche aufweisen, in denen die beiden Lagen stoffschlüssig miteinander verbunden sind, und die Schenkel der Lamellen oder der sonstigen Tragelemente Ausnehmungen aufweisen, die derart große seitliche Öffnungen aufweisen, dass die Schenkel in die Taschen einsteckbar sind, wobei die Verbindungsbereiche in die Ausnehmungen gelangen, wobei die Ränder der Ausnehmungen wenigstens teilweise haken- oder zackenförmige Strukturen aufweisen, die in der montierten Stellung form- und/oder kraftschlüssig mit den Rändern der Verbindungsbereiche zusammenwirken.

Die erfindungsgemäße Lösung bietet den Vorteil, dass die Lamellen über ihre Schenkel ohne zusätzliche Bauelemente an dem Faltenbalg angebracht werden können. Die stoffschlüssige Verbindung der Lamellenlagen im Bereich der Verbindungsbereiche wird vor dem Einsetzen der Lamellen vorzugsweise durch Verschweißen der beiden Lagen gebildet. Bei geeigneten Kunststoffmaterialien ist es bevorzugt, die beiden Lagen der Zwischenfalte in den Verbindungsbereichen im Wege des Ultraschallschweißens oder Hochfrequenzschweißens stoffschlüssig miteinander zu verbinden, so dass die Verbindungsbereiche als Schweißstellen ausgeführt sind. Diese können nicht mehr zerstörungsfrei gelöst werden. Alternativ können die Lagen auch mittels Klebstoffen in den Verbindungsbereichen stoffschlüssig miteinander verbunden werden.

Der Faltenbalg selbst muss bei dieser Art der Festlegung der Lamellen auch nicht mehr durchstoßen werden, so dass seine Schutzfunktion z.B. gegenüber aus dem Arbeitsraum austretenden Flüssigkeiten besonders gut gewahrt bleibt.

Die haken- oder zackenförmige Strukturen verkrallen sich beim Einstecken in der Art eines Widerhakens vorzugsweise unlösbar mit dem Material der Verbindungsbereiche, so dass die Schenkel bereits vor der Montage der Schutzabdeckung unverlierbar mit dem Faltenbalgelement verbunden sind.

Besonders vorteilhaft ist auch der Umstand, dass sich die erfindungsgemäße Schutzabdeckung besser automatisiert herstellen lässt, weil auch der Schritt der Herstellung der Verbindungsbereiche z.B. durch eines der genannten Schweißverfahren automatisiert durchführbar ist, während das Anordnen metallischer Halteelemente in den Zwischenfalten aufgrund der instabilen Faltenbalgstruktur problematisch ist.

Die Verbindungsbereiche können ohne Nachteil in der Funktion derart flach ausgeführt sein, dass sich das Blockmaß der komprimierten Schutzabdeckung nicht vergrößert.

Typischerweise sind pro Zwischenfalte wenigstens zwei, ggf. mehr Verbindungbereiche vorgesehen, wobei der zu montierende Schenkel eine entsprechende Anzahle korrespondierender Ausnehmungen aufweist.

In einer bevorzugten Ausführungsform der Erfindung ist vorgesehen, dass die Schenkel der Lamellen durch die offenen Flanken der Taschen eingesteckt sind.

Die offenen Taschen erlauben es, sich praktisch über die gesamte Breite der Tasche erstreckende Schenkel einzusetzen, so dass sich ein besonders guter Halt in den Taschen mit den Verbindungsbereichen ergibt.

Um einen besonders guten Halt der Schenkel an den Verbindungbereichen zu ermöglichen, ist vorgesehen, dass eine erste haken-oder zackenförmige Struktur an einem ersten Rand der Ausnehmung angeordnet ist, wobei diesem Rand ein parallel zu ihm ausgerichteter zweiter Rand der Ausnehmung angeordnet ist, der glatt ausgebildet ist oder eine weitere haken- oder zackenförmige Struktur aufweist.

Um ein sicheres Erreichen einer definierten Endlage der Schenkel in den Taschen zu erleichtern, ist vorgesehen, dass zwischen den Rändern der Ausnehmungen jeweils ein Ende der Ausnehmung als Anschlag vorgesehen ist, der sich gegen den jeweiligen Verbindungsbereich der beiden Lagen anlegt und die Endposition der Lamelle definiert.

Alternativ zur Anordnung der haken-oder zackenförmige Struktur am Rand eines kanalartigen Abschnitts der Ausnehmung mit parallelen Rändern kann vorgesehen sein, dass eine erste haken-oder zackenförmige Struktur an einem ersten Rand der Ausnehmung angeordnet ist, wobei diesem Rand gegenüber ein weiterer Rand der Ausnehmung angeordnet ist, der glatt ausgebildet ist oder eine weitere haken- oder zackenförmige Struktur aufweist, wobei sich der Abstand der beiden Ränder in der Einschubrichtung des Schenkels verringert.

Bei dieser Variante ist darauf zu achten, dass die exakte Einstecktiefe erreicht wird. Je tiefer der Schenkel eingesteckt wird, desto tiefer verkrallen sich die Haken oder Zacken mit dem Material der Verbindungsbereiche.

Eine besonders vorteilhafte Weiterbildung der Erfindung sieht vor, dass die Ausnehmungen L-förmig ausgebildet sind, wobei sie einen senkrecht vom Rand des Schenkels verlaufenden Einsetzabschnitt und einen parallel zum Schenkel verlaufenden Verriegelungsabschnitt aufweisen, in dem die haken- oder zackenförmigen Strukturen vorgesehen sind.

Die Ausnehmungen bilden hierbei mit den Verbindungsbereichen eine einem Bajonettverschluss ähnliche Art der Verriegelung, wobei die Schenkel zunächst nahezu kraftfrei in die Tasche eingesteckt werden können und sodann parallel in ihre Endlage verschoben werden.

Vorteilhafterweise ist vorgesehen, dass wenigstens ein Rand des Verriegelungsabschnitts mit der haken- oder zackenförmige Struktur ausgebildet ist, so dass das Verankern der Schenkel an dem Faltenbalgelement an dieser Stelle stattfinden kann.

Eine besonders bevorzugte Ausführungsform der Erfindung sieht vor, dass die Haken oder Zacken der haken- oder zackenförmige Struktur elastisch nachgiebig ausgebildet sind. Durch eine derartige Ausbildung können die Haken oder Zacken beim Einstecken der Schenkel ausweichen, so dass sie das Material der Verbindungsbereiche durch das Einstecken auch weniger beansprucht werden. In der Auszugsrichtung ist ein Ausziehen durch die erhöhten Auszugskräfte in Folge der Widerhakeneffekte und/oder einer formschlüssigen Verriegelung erschwert oder unmöglich.

Entsprechend bevorzugt kann eine Ausführungsform der Erfindung sein, bei welcher die Haken der haken- oder zackenartigen Struktur als federnde Widerhaken oder Federzungen ausgebildet sind. Durch die federnde Ausbildung weichen die Haken beim Einschieben des Schenkels zunächst den Verbindungsbereichen aus, blockieren aber ein Herausziehen wirkungsvoll, weil sie sich bei einer Kraftbeaufschlagung in der Gegenrichtung versteifen und sich mit ihren Spitzen in das Material der Verbindungsbereiche verkrallen. Hierbei können form- und/oder kraftschlüssig wirkende Haltekräfte aufgebaut werden.

Die Haken einer Ausnehmung können fischgrätenartig parallel zueinander angeordnet sein.

Eine formschlüssige Verriegelung kann beispielsweise in der Weise umgesetzt sein, dass die haken- oder zackenförmige Struktur wenigstens ein bewegliches Hakenelement aufweist, das nach dem Einstecken in eine Verriegelungsstellung schnappt oder in eine Verriegelungsstellung bewegbar ist.

Die Elastizität kann z.B. konstruktiv auf einfache Weise dadurch erreicht werden, dass im Bereich hinter wenigstens einem Teil der haken- oder zacken-förmige Strukturen Aussparungen in den Schenkeln vorgesehen sind, so dass die Ränder der Ausnehmungen mit den haken- oder zackenförmige Strukturen eine elastische Nachgiebigkeit besitzen. Dies erfordert natürlich gewisse elastische Eigenschaften des für die Schenkel zum Einsatz kommenden Materials.

Ein Beispiel für eine Ausgestaltung mit einer formschlüssigen Verriegelung sind federnde Schnapphaken, die in korrespondierende Hinterschneidungen einschnappen.

Manuell zu betätigenden Elemente können an dem Schenkel angeformt oder angebracht sein, es ist aber auch möglich, dass das bewegliche Element getrennt von dem Schenkel ausgebildet ist und nach dem Einstecken des Schenkels in die Tasche einsetzbar ist. Unabhängig von ihrer speziellen Ausbildung haben manuell zu betätigende Elemente den Vorteil, dass sie auch derart ausgebildet sein können, dass nach ihrem Lösen auch wieder eine zerstörungsfreie Demontage ermöglicht ist. Auch bei rein federnden Elementen gemäß den zuvor beschriebenen Ausführungsformen ist es möglich, z.B. durch einen geeigneten Werkzeugeingriff die Verriegelung aufzuheben, so dass die entsprechende Lamelle aus der Tasche der Zwischenfalte entfernt werden kann, z.B. wenn sie einen Defekt aufweist und ausgetauscht werden muss.

Typischerweise ist vorgesehen, dass die Schenkel aus Stahlblech bestehen, sie können aber auch z.B. aus geeigneten Kunststoffen bestehen.

Neben vielen anderen Materialien, die für die Faltenbalgelemente zum Einsatz kommen können, haben sich thermoplastische Kunststoffe, wie z.B. sich Polypropylen für das Verschweißen und auch sonst als Faltenbalgmaterial als besonders geeignet erwiesen. Beispielhaft erwähnt werden sollen an dieser Stelle rein aus einem oder mehreren derartigen Thermoplasten bestehende Faltenbälge, die mehrlagig ausgebildet sein und/oder eine Verstärkung aufweisen können, z.B. in der Form einer eingebetteten Gewebestruktur.

Ein weitere besonders bevorzugte Ausführungsform der Erfindung sieht vor, dass sich ein einziger Faltenbalg als Faltenbalgelement über die gesamte Länge und Breite der Schutzabdeckung erstreckt und das einzige Verbindungselement der Lamellen untereinander bildet.

Diese Variante besteht aus besonders wenigen Teilen und der vollflächige Faltenbalg schützt auf der Außenseite die innen in Richtung eines Arbeitsraumes z.B. einer Werkzeugmaschine angeordneten Lamellen, die unempfindlich gegenüber mechanischen Einflüssen sind, wie z.B. umherfliegenden Spänen bei der zerspanenden Bearbeitung von Werkstücken.

Mit Faltenbalgelemente können hier aber auch einzelne, sich nicht über die gesamte Fläche der Schutzabdeckung erstreckende Faltenbalgelemente gemeint sein, wie z.B. als Auszugsbegrenzung vorgesehene Faltenbalgelemente.

Weitere Merkmale, Einzelheiten und Vorteile der Erfindung ergeben sich aus dem Wortlaut der Ansprüche sowie aus der nachfolgend anhand der Zeichnung beschriebenen Ausführungsbeispiel. Es zeigen:
Fig. 1 eine Ansicht einer ersten Ausführungsform einer Schutzabdeckung für den Arbeitsraum einer Werkzeugmaschine;
Fig. 2 eine Detailansicht des Faltenbalges der Schutzabdeckung gemäß Fig. 1 ohne Lamellen
Fig. 3 a, b, c eine Montageabfolge einer Lamelle an dem Faltenbalg;
Fig. 4 eine beispielhafte Übersicht möglicher weiterer Ausgestaltungen der Ausnehmungen.

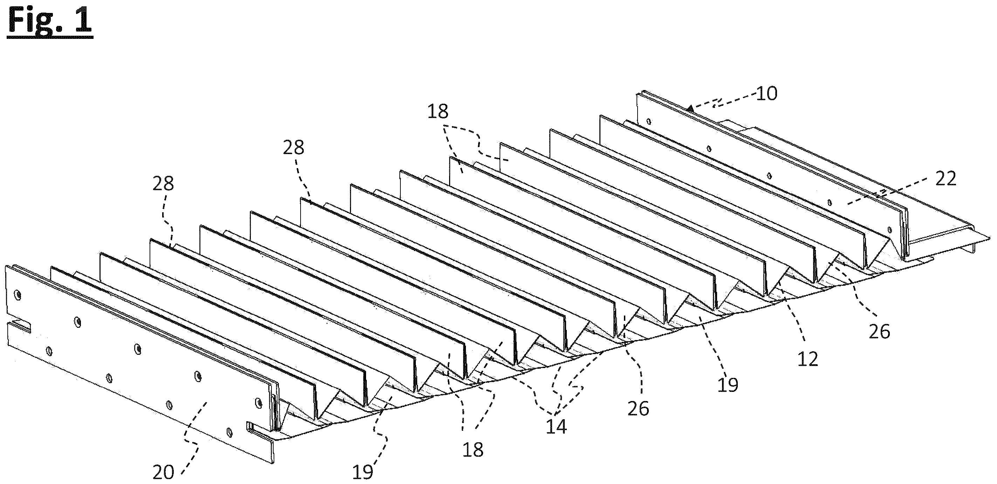

In Fig. 1 ist eine längenvariable Schutzabdeckung 10 gezeigt, wie sie in Werkzeugmaschinen eingesetzt wird, um Arbeitsräume abzuschirmen, in denen z.B. metallische Werkstücke bearbeitet werden. Die Schutzabdeckung 10 passt sich hierbei der veränderlichen Größe an, wobei ein Faltenbalgelement 12, das hier aus einem sich vollflächig über nahezu die gesamte variable Fläche der Schutzabdeckung 10 erstreckender Faltenbalg gebildet ist.

Zu Verstärkung sind auf der dem Arbeitsraum zugewandten Seite L-förmige Lamellen 14 aus Stahl vorgesehen. Diese sind mit Schenkeln 16 in Zwischenfalten 18 des Faltenbalges 12 festgelegt, worauf später noch näher eingegangen wird. Die Lamellen 14 überlappen sich gegenseitig schuppenartig mit Lamellenabschnitten 19 und bilden damit einen hoch belastbaren, längenvariablen Schutz des Faltenbalges 12 vor Spänen, die sehr heiß sein und auch eine erhebliche Aufprallgeschwindigkeit haben können. Durch die schuppenartige Überlappung werden anhaftende Späne während des Komprimierens der Schutzabdeckung durch den Rand der benachbarten Lamellen abgestreift und können nicht bis zu dem empfindlichen Faltenbalg vordringen.

An den beiden längsseitigen Enden der Schutzabdeckung sind Flanschelemente 20, 22 vorgesehen, mit welchen die Schutzabdeckung 10 an relativ zueinander beweglichen Teilen der Werkzeugmaschine (nicht gezeigt) montiert werden kann. Die gezeigte Gesamtform ist beispielhaft zu verstehen, da die Schutzabdeckungen 10 individuell an den jeweiligen Einsatzzweck angepasst werden können. So sind z.B. auch L-förmige Ausführungsformen mit zwei verbundenen, in einem rechten Winkel angeordneten Faltenbälgen möglich.

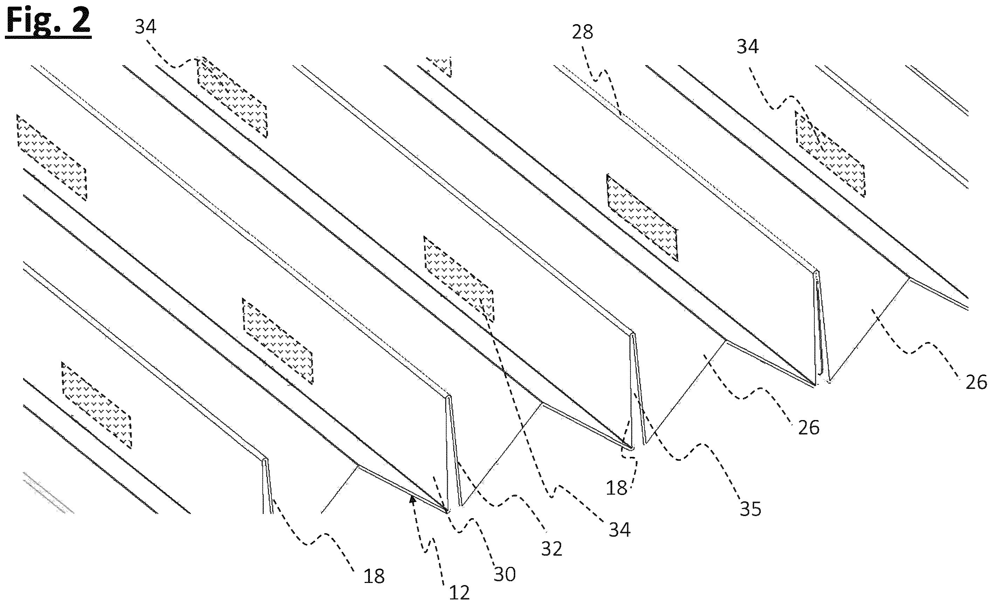

Fig. 2 zeigt den Faltenbalg 10 in vergrößerter Detailansicht ohne Lamellen. Gut zu erkennen ist die Ausbildung von taschenartigen Zwischenfalten 18 zwischen regulären Auszugsfalten 26. Die Zwischenfalten 18 sind durch zwei über eine Knickstelle 28 verbundene Lagen 30, 32 des Faltenbalges gebildet, die über eine bestimmte Anzahl Verbindungsbereiche 34 aneinander festgelegt sind. Dies stellt keine vollflächige Befestigung der Lagen 30, 32 aneinander dar, vielmehr sollen zum Erreichen der taschenartigen Ausbildung der Zwischenfalten 18 gerade nur bestimmte Zonen miteinander verbunden werden, zwischen denen spaltartige Freiräume 34 mit einer Öffnung zwischen den beiden Lagen 30, 32 verbleiben, in die die Schenkel 16 der Lamellen eingesetzt werden können.

Die Verbindungsbereiche 34 des hier vorgestellten Ausführungsbeispiels mit aus Polypropylen bestehendem Faltenbalg 12 sind durch Ultraschallverschweißen stoffschlüssig miteinander verbunden, so dass die Materialfestigkeit der Verbindungsbereiche der des Faltenbalgmaterials entspricht. Das Ultraschallverschweißen kann bei allen geeigneten Kunststoffmaterialien als Faltenmaterial eingesetzt werden. Auch mit schweißbaren Kunststoffen überzogene Gewebe können zum Einsatz kommen.

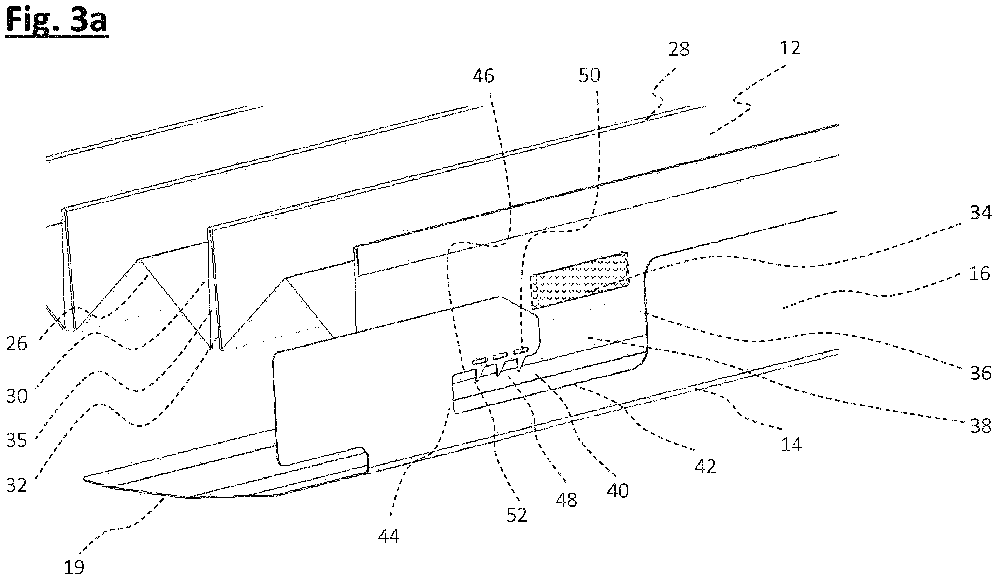

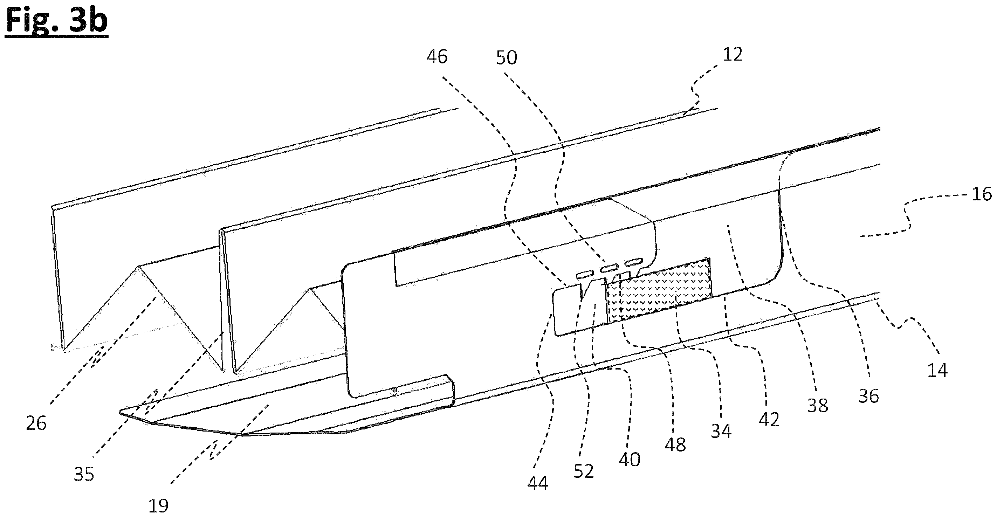

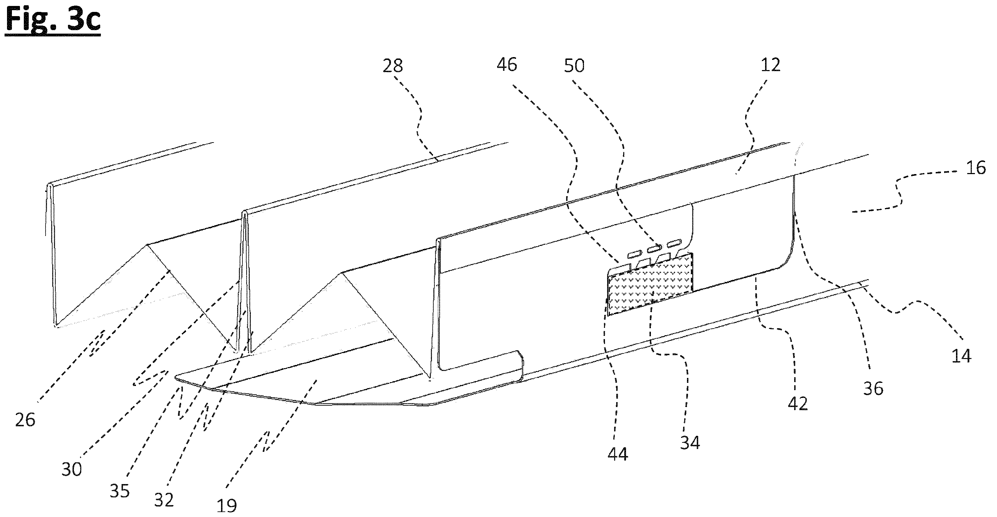

In Fig. 3 a bis c wird nun die Montage der Lamellen 14 mit ihren Schenkel 16 in den taschenförmigen Zwischenfalten 18 erläutert, wobei zur besseren Veranschaulichung die im Sinne der Darstellung vordere Lage 30 des Faltenbalges 12 in den Darstellungen weggelassen worden ist und nur der Verbindungsbereich auf der hinteren Lage 32 des Faltenbalges 12 gezeigt ist. In Fig. 3 a ist zunächst der Schenkel 16 der Lamelle 14 mit einer L-förmigen Ausnehmung 36 gezeigt. Die L-förmige Ausnehmung 36 gliedert sich in einen zum Rand des Schenkels offenen Einsetzabschnitt 38 und einen sich daran anschließenden, rechtwinklig abgewinkelten Verriegelungsabschnitt 40, der parallel zur Längserstreckung des Schenkels 16 verläuft. Ein dem Lamellenabschnitt 19 zugewandter Rand 42 bildet einen ersten Anschlag und führt bis zu einem als Anschlag ausgebildeten Ende 44 des Verriegelungsabschnitts 40. Hieran schließt sich ein Rand 46 an, der eine hakenartige Struktur 48 aufweist. Der Schenkel weist Aussparungen 50 im Bereich der hakenartigen Struktur 48 auf, die für eine gewisse elastische Nachgiebigkeit der Struktur 48 bewirken.

Bei der Montage der Schenkel 16 an dem Faltenbalg 12 werden diese zunächst so platziert, dass die Verbindungsbereiche 34 der zugehörigen Zwischenfalte 18 zu den Einsetzabschnitten ausgerichtet sind (siehe Fig. 3a). Anschließen wird der Schenkel 16 in die taschenförmige Zwischenfalte 18 geschoben, bis sich die Verbindungsbereiche 34 an die Ränder 42 der Ausnehmungen 36 an. Anschließend kann der Schenkel 16 parallel zur seiner Längserstreckung verschoben werden, wobei die Verbindungsbereiche 34 in die Verriegelungsabschnitte 40 der Ausnehmungen 36 gelangen (siehe Fig. 3b).

Wie aus Fig. 3b zu erkennen ist, ist der Abstand der Spitzen 52 der hakenförmigen Struktur 48 zu dem gegenüberliegenden Rand 42 etwas kleiner gewählt als die Höhe des Verbindungsabschnittes 34. Beim Einschieben weicht die hakenartige Struktur 48 durch die vorgesehene Elastizität etwas aus und auch das Material in dem Verbindungsbereich 34 kann etwas ausweichen. Bedingt durch die Geometrie der Haken ist der Kraftaufwand zum Einschieben erheblich niedriger als in der Gegenrichtung, so dass der Schenkel an den Verbindungsabschnitten dauerhaft fixiert ist. Je nach Auslegung kann eine Demontage ermöglicht sein, ggf. nach einem mechanischen Eingriff.

Das Ende 42 des Verriegelungsabschnittes begrenzt den Einschubweg und definiert die in Fig. 3c gezeigte Endlage des Schenkels 16 in der Zwischenfalte 18.

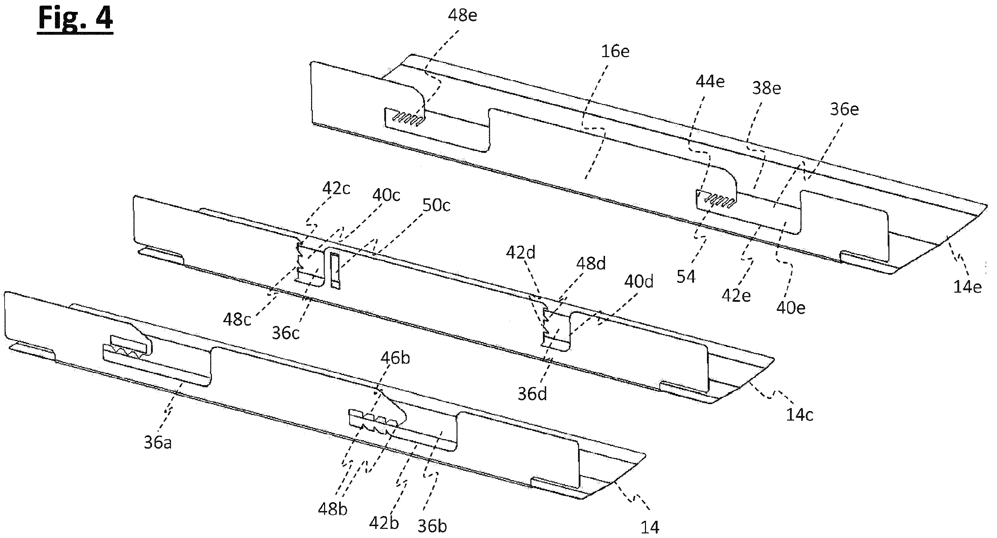

In Fig. 4 ist eine nicht abschließende Auswahl an möglichen Ausnehmungen gezeigt, die zur Verriegelung an einem korrespondierend ausgeführten Verbindungsbereich geeignet sind. Die gezeigten Ausnehmungen 36 a bis d sollen nicht an einem Schenkel kombiniert werden, dies dient in Fig. 4 nur der Veranschaulichung. Grundsätzlich können aber an einem Schenkel auch unterschiedliche Ausnehmungen kombiniert werden.

Die Ausnehmung 36a entspricht in Fig. 4 der zuvor beschriebenen Ausführungsform.

Due Ausnehmung 36b ist ebenfalls L-förmig ausgebildet, jedoch sind an beiden Rändern 42b und 46b der Ausnehmung hakenförmige Strukturen 48b vorgesehen. Es sind keine Aussparungen hinter den hakenförmigen Strukturen vorgesehen.

Die in Fig. 4 dargestellte mittlere Lamelle 14c zeigt ein anderes Konzept der Verriegelung, bei welchem die Ausnehmungen 36c und d nur einen sich senkrecht vom Schenkelrand erstreckenden Verriegelungsabschnitt 40c, d aufweisen. Die Verriegelung erfolgt hier also bereits unmittelbar beim Einstecken des Schenkels 16 c in die Zwischenfalte 18. Hakenförmige Strukturen 48c, d sind an jeweils einem Rand 42c, d des Verriegelungsabschnittes angeordnet, der gegenüberliegende Rand 46c, d ist parallel hierzu angeordnet und glattflächig ausgebildet, wobei der Unterschied der beiden Varianten darin besteht, dass bei der Ausnehmung 36c hinter dem glattflächigen Rand 46c eine Aussparung 50c vorgesehen. Die erhöhe Elastizität wird hier also durch den elastischen, gegenüberliegenden Rand 46c bereitgestellt. Diese Lösung kann auch die anderen Ausführungsbeispiele übertragen werden.

Fig. 4 zeigt weiterhin eine weitere Ausführungsform einer Lamelle 14e, deren Schenkel 16e wiederum L-förmige Ausnehmungen 36e mit jeweils einem Einsetzabschnitt 38e und einem Verriegelungsabschnitt 40e aufweisen. Die Darstellung entspricht im Übrigen Fig. 3c, allerdings sind die in den Ausnehmungen liegenden Verbindungsbereiche hier nicht gezeigt. Aufgrund der unterschiedlichen Ausrichtung der Verriegelungsabschnitte 40e erfolgt der Einschub im Vergleich zu Fig. 3 a bis c auch in der entgegengesetzten Richtung.

Deutlich anders sind die haken- oder zackenförmigen Strukturen 48e ausgeführt, die hier biegsame Federzungen 54 aufweisen. Diese sind hier fischgrätenartig parallel zueinander angeordnet, was nicht notwendigerweise der Fall sein muss. Die Federzungen 54 sind in sich derart biegeweich und nachgiebig, dass Aussparungen hinter den haken- oder zackenförmigen Strukturen 48e vollständig entfallen können. Beim Einstecken des Schenkels über die Verbindungsbereiche weichen die Federzungen leicht aus und bieten nur einen geringen Widerstand, während sie sich bei einer Kraftbeaufschlagung in der entgegengesetzten Richtung aufstellen und in der Art von Widerhaken, die man auch als Formrichtgesperre bezeichnet, an den Verbindungsbereichen form- und/oder kraftschlüssig verkrallen und eine sehr große Aufzugskraft erforderliche wäre, um den Schenkel nach der Montage an dem Faltenbalgelement wieder zu lösen.

Die Erfindung ist nicht auf eine der vorbeschriebenen Ausführungsformen beschränkt, sondern in vielfältiger Weise abwandelbar. So können beispielsweise die Haken oder Zacken alternativ oder ergänzend zu den Aussparungen selbst als elastische Elemente ausgebildet sein. Hierbei können sie auch als Schnapphaken ausgebildet sein, die hinter den Verbindungsbereichen 34 einschnappen und so für eine Verriegelung sorgen. Es können auch von den Schenkeln unabhängige Verriegelungselemente zum Einsatz kommen, die erst nach dem Einstecken der Schenkel in die Taschen zum Verriegeln der Schenkel eingesetzt werden.

Die Aussparungen können zur Ausbildung einer verbesserten Elastizität großflächiger ausgebildet sein als in den Abbildungen gezeigt. So können die haken- oder auch zackenförmigen Strukturen an einem Steg angeordnet sein, der in der Art eines Federelements an den Rest des Schenkels angebunden ist.

Es können auch andere Faltenbalgelemente mit entsprechend ausgeführten Verbindungsbereichen mit Ausnehmungen in den Schenkeln verbunden sein, z.B. Aussperren, die auch nur einzelne benachbarte Lamellen miteinander verbinden können. Die Schenkel können auch Halteelementen oder reine Versteifungselementen zugeordnet sein.

### Bezugszeichenliste

- 10: Längenvariable Schutzabdeckung
- 12: Faltenbalgelement
- 14: Lamellen
- 16: Schenkel der Lamellen
- 18: Zwischenfalten
- 19: Lamellenabschnitte
- 20, 22: Flanschelemente
- 26: Auszugsfalte
- 28: Knickstellen der Zwischenfalten
- 30, 32: Lagen des Faltenbalges
- 34: Verbindungsbereiche
- 35: Freiräume/Taschen
- 36: L-förmige Ausnehmungen
- 38: Einsetzabschnitt
- 40: Verriegelungsabschnitt
- 42: Rand der Ausnehmung
- 44: Ende/Anschlag der Ausnehmung
- 46: Rand der Ausnehmung
- 48: haken-oder zackenartige Struktur
- 50: Aussparungen
- 52: Spitzen der hakenförmigen Struktur
- 54: Federzungen / Widerhaken

## Patentansprüche

1. Längenvariable Schutzabdeckung mit wenigstens einem Faltenbalgelement (12), bei welchem eine bestimmte Anzahl von Falten als Zwischenfalten (18) ausgebildet sind, indem jeweils zwei benachbarte Lagen (30, 32) des Faltenbalgelements (12) miteinander verbunden sind, wobei zwischen diesen Lagen (30, 32) in den als Taschen ausgebildeten Zwischenfalten (18) Schenkel (16) von L-förmigen Lamellen (14) oder von anderen Trageelementen festgelegt sind, wobei die Schenkel (16) Ausnehmungen (36) aufweisen, die zur Festlegung an dem Faltenbalgelement (12) dienen, **dadurch gekennzeichnet, dass** die beiden Lagen (30, 32) der Zwischenfalten (18) Verbindungsbereiche (34) aufweisen, in denen die beiden Lagen (30, 32) stoffschlüssig miteinander verbunden sind, und die Schenkel (16) der Lamellen (14) oder der sonstigen Tragelemente Ausnehmungen (36) aufweisen, die derart große seitliche Öffnungen aufweisen, dass die Schenkel (16) in die Taschen (35) einsteckbar sind, wobei die Verbindungsbereiche (34) in die Ausnehmungen (36) gelangen, wobei an Rändern (42, 46) der Ausnehmungen (36) wenigstens teilweise eine haken- oder zackenförmige Struktur (48) vorgesehen ist, die in der montierten Stellung form- und/oder kraftschlüssig mit den Rändern der Verbindungsbereiche (34) zusammenwirken.

2. Längenvariable Schutzabdeckung nach Anspruch 1, **dadurch gekennzeichnet, dass** die Verbindungsbereiche (36) durch Schweißstellen gebildet sind.

3. Längenvariable Schutzabdeckung nach Anspruch 1 oder 2, **dadurch gekennzeichnet, dass** die Schenkel (36) der Lamellen (14) durch die offenen Flanken der Taschen (35) eingesteckt sind.

4. Längenvariable Schutzabdeckung nach einem der Ansprüche 1 bis 3, **dadurch gekennzeichnet, dass** eine erste haken-oder zackenförmige Struktur (48) an einem ersten Rand (42) der Ausnehmung angeordnet ist, wobei diesem Rand ein parallel zu ihm ausgerichteter weiterer Rand (46) der Ausnehmung (36) angeordnet ist, der glatt ausgebildet ist oder eine weitere haken- oder zackenförmige Struktur aufweist.

5. Längenvariable Schutzabdeckung nach Anspruch 4, **dadurch gekennzeichnet, dass** zwischen den Rändern (42, 46) der Ausnehmungen (36) jeweils ein Ende (44) der Ausnehmung als Anschlag vorgesehen ist, der sich gegen den jeweiligen Verbindungsbereich (34) der beiden Lagen (30, 32) anlegt und die Endposition der Lamelle (14) definiert.

6. Längenvariable Schutzabdeckung nach einem der Ansprüche 1 bis 3, **dadurch gekennzeichnet, dass** eine erste haken-oder zackenförmige Struktur (48f) an einem ersten Rand der Ausnehmung (36f) angeordnet ist, wobei diesem Rand gegenüber ein weiterer Rand der Ausnehmung angeordnet ist, der glatt ausgebildet ist oder eine weitere haken-oder zacken-förmige Struktur aufweist, wobei sich der Abstand der beiden Ränder in der Einschubrichtung des Schenkels (16f) verringert.

7. Längenvariable Schutzabdeckung nach einem der vorhergehenden Ansprüche, **dadurch gekennzeichnet, dass** die Ausnehmungen (36) L-förmig ausgebildet sind, wobei sie einen senkrecht vom Rand des Schenkels (16) verlaufenden Einsetzabschnitt (38) und einen parallel zum Schenkel (16) verlaufenden Verriegelungsabschnitt (40) aufweisen, in dem die haken- oder zackenförmigen Strukturen (48) vorgesehen sind.

8. Längenvariable Schutzabdeckung nach Anspruch 7, **dadurch gekennzeichnet, dass** wenigstens ein Rand (42) des Verriegelungsabschnitts (40) mit der haken- oder zacken-förmige Struktur (48) ausgebildet ist.

9. Längenvariable Schutzabdeckung nach einem der vorhergehenden Ansprüche, **dadurch gekennzeichnet, dass** die Haken (54) oder Zacken der haken- oder zackenartigen Struktur elastisch nachgiebig ausgebildet sind.

10. Längenvariable Schutzabdeckung nach Anspruch 9, **dadurch gekennzeichnet, dass** die Haken der haken- oder zackenartigen Struktur als federnde Widerhaken (54) ausgebildet sind.

11. Längenvariable Schutzabdeckung nach Anspruch 9 oder 10, **dadurch gekennzeichnet, dass** im Bereich hinter wenigstens einem Teil der haken- oder zackenförmige Strukturen (48) Aussparungen (50) in den Schenkeln (16) vorgesehen sind, so dass die Ränder (42, 46) der Ausnehmungen (36) mit den haken- oder zackenförmige Strukturen (48) eine elastische Nachgiebigkeit besitzen.

12. Längenvariable Schutzabdeckung nach einem der vorhergehenden Ansprüche, **dadurch gekennzeichnet, dass** die haken- oder zackenförmige Struktur wenigstens ein bewegliches Element aufweist, das nach dem Einstecken in eine Verriegelungsstellung schnappt oder in eine Verriegelungsstellung bewegbar ist.

13. Längenvariable Schutzabdeckung nach Anspruch 11, **dadurch gekennzeichnet, dass** das bewegliche Element getrennt von dem Schenkel ausgebildet ist und nach dem Einstecken des Schenkels in die Tasche einsetzbar ist.

14. Längenvariable Schutzabdeckung nach einem der vorhergehenden Ansprüche, **dadurch gekennzeichnet, dass** sich ein einziger Faltenbalg (12) als Faltenbalgelement über die gesamte Länge und Breite der Schutzabdeckung (10) erstreckt und das einzige Verbindungselement der Lamellen (14) untereinander bildet.

15. Längenvariable Schutzabdeckung nach einem der vorgehenden Ansprüche, **dadurch gekennzeichnet, dass** wenigstens ein Faltenbalgelement als Auszugsbegrenzung vorgesehen ist.

## Claims

1. A variable-length protective cover with at least one bellows element (12), in which a certain number of folds are formed as intermediate folds (18), in that in each case two adjacent layers (30, 32) of the bellows element (12) are connected to one another, wherein between these layers (30, 32), the intermediate folds (18) of L-shaped slats (14) are fixed in the intermediate folds (18) formed as pockets or by other support elements, wherein the legs (16) have recesses (36) which serve for fixing on the bellows element (12), **characterized in that** the two layers (30, 32) of the intermediate folds (18) have connecting regions in which the two layers (30, 32) are integrally bonded to one another, and the legs (16) of the slats (14) or of the other support elements have recesses (36) which have such large lateral openings that the legs (36) can be inserted into the pockets (35), wherein the connection regions (34) pass into the recesses (36), wherein at least part of the edges (42, 46) of the recesses (36) is provided with a hook-like or serrated structure (48) which interacts with the edges of the connection regions (34) in a form-fitting and/or force-fitting manner in the mounted position.

2. The variable-length protective cover according to claim 1, **characterized in that** the connection regions (36) are formed by welding points.

3. The variable-length protective cover according to claim 1 or 2, **characterized in that** the legs (36) of the slats (14) are inserted through the open flanks of the pockets (35).

4. The variable-length protective cover according to one of claims 1 to 3, **characterized in that** a first hook-like or serrated structure (48) is arranged on a first edge (42) of the recess, wherein this edge is arranged on a further edge (46) of the recess (36) oriented parallel to it, which is designed to be smooth or has a further hook-shaped or serrated structure.

5. The variable-length protective cover according to claim 4, **characterized in that** an end (44) of the recess is provided between the edges (42, 46) of the recesses (36) as a stop which rests against the respective connecting region (34) of the two layers (30, 32) and defines the end position of the slat (14).

6. The variable-length protective cover according to any of claims 1 to 3, **characterized in that** a first hook-like or serrated structure (48f) is arranged on a first edge of the recess (36f), wherein this edge is arranged opposite a further edge of the recess which is designed to be smooth or has a further hook-shaped or serrated structure, the distance between the two edges being reduced in the insertion direction of the leg (16f).

7. The variable-length protective cover according to any of the preceding claims, **characterized in that** the recesses (36) are L-shaped, wherein they have an insertion section (38) extending perpendicularly from the edge of the leg (16) and a locking section (40) extending parallel to the leg (16), in which the hook-like or serrated structures (48) are provided.

8. The variable-length protective cover according to claim 7, **characterized in that** at least one edge (42) of the locking portion (40) is formed with the hook-like or serrated structure (48).

9. The variable-length protective cover according to any of the preceding claims, **characterized in that** the hooks (54) or spikes of the hook-like or serrated structure are designed to be elastically flexible.

10. The variable-length protective cover according to claim 9, **characterized in that** the hooks of the hook-like or serrated structure are designed as resilient barbs (54).

11. The variable-length protective cover according to claim 9 or 10, **characterized in that** in the region behind at least a portion of the hook-like or serrated structures (48), recesses (50) are provided in the legs (16), so that the edges (42, 46) of the recesses (36) have an elastic resilience with the hook or serrated structures (48).

12. The variable-length protective cover according to any of the preceding claims, **characterized in that** the hook-like or serrated structure has at least one movable element which is snapped into a locking position after insertion or can be moved into a locking position.

13. The variable-length protective cover according to claim 11, **characterized in that** the movable element is formed separately from the leg and can be inserted into the pocket after the insertion of the leg.

14. The variable-length protective cover according to any of the preceding claims, **characterized in that** a single bellows (12) extends as a bellows element over the entire length and width of the protective cover (10) and forms the single connecting element of the slats (14) with one another.

15. The variable-length protective cover according to any of the preceding claims, **characterized in that** at least one bellows element is provided as a pull-out limitation.

## Revendications

1. Couverture de protection à longueur variable avec au moins un élément de soufflet (12), dans lequel un certain nombre de plis sont formés en tant que plis intermédiaires (18), en ce que respectivement deux couches voisines (30, 32) de l'élément de soufflet (12) sont connectées l'une à l'autre, dans laquelle des branches (16) de lamelles (14) en forme de L ou d'autres éléments de support sont fixées entre ces couches (30, 32) dans les plis intermédiaires (18) conçus en tant que poches, dans laquelle les branches (16) présentent des évidements (36) qui servent à la fixation sur l'élément de soufflet (12), **caractérisée en ce que** les deux couches (30, 32) des plis intermédiaires (18) présentent des zones de connexion (34) dans lesquelles les deux couches (30, 32) sont connectées l'une à l'autre par accouplement de matière, et les branches (16) des lamelles (14) ou des autres éléments de support présentent des évidements (36) qui présentent des ouvertures latérales si grandes que les branches (16) peuvent être enfichées dans les poches (35), dans laquelle les zones de connexion (34) parviennent dans les évidements (36), dans laquelle une structure (48) en forme de crochets ou de dents est prévue au moins partiellement au niveau de bords (42, 46) des évidements (36), crochets ou dents qui coopèrent dans la position montée avec les bords des zones de connexion (34) par complémentarité de formes et/ou à force.

2. Couverture de protection à longueur variable selon la revendication 1, **caractérisée en ce que** les zones de connexion (36) sont formées par des points de soudure.

3. Couverture de protection à longueur variable selon la revendication 1 ou 2, **caractérisée en ce que** les branches (36) des lamelles (14) sont enclenchées à travers les flancs ouverts des poches (35).

4. Couverture de protection à longueur variable selon l'une quelconque des revendications 1 à 3, **caractérisée en ce qu'**une première structure en forme de crochets ou de dents (48) est disposée sur un premier bord (42) de l'évidement, dans laquelle un bord supplémentaire (46) de l'évidement (36) orienté parallèlement à celui-ci est disposé sur ce bord, bord supplémentaire qui est conçu de manière lisse ou présente une structure supplémentaire en forme de crochets ou de dents.

5. Couverture de protection à longueur variable selon la revendication 4, **caractérisée en ce qu'**entre les bords (42, 46) des évidements (36), respectivement une extrémité (44) de l'évidement est prévue en tant que butée qui repose contre la zone de connexion respective (34) des deux couches (30, 32) et définit la position finale de la lamelle (14).

6. Couverture de protection à longueur variable selon l'une quelconque des revendications 1 à 3, **caractérisée en ce qu'**une première structure en forme de crochets ou de dents (48f) est disposée sur un premier bord de l'évidement (36f), dans laquelle un bord supplémentaire de l'évidement est disposé en face de ce bord, bord supplémentaire qui est conçu de manière lisse ou présente une structure supplémentaire en forme de crochets ou de dents, dans laquelle la distance entre les deux bords diminue dans la direction d'introduction de la branche (16f).

7. Couverture de protection à longueur variable selon l'une quelconque des revendications précédentes, **caractérisée en ce que** les évidements (36) sont conçus en forme de L, dans laquelle ils présentent une section d'insertion (38) s'étendant perpendiculairement au bord de la branche (16) et une section de verrouillage (40) s'étendant parallèlement à la branche (16) dans laquelle les structures en forme de crochets ou de dents (48) sont prévues.

8. Couverture de protection à longueur variable selon la revendication 7, **caractérisée en ce qu'**au moins un bord (42) de la section de verrouillage (40) est conçu avec la structure en forme de crochets ou de dents (48).

9. Couverture de protection à longueur variable selon l'une quelconque des revendications précédentes, **caractérisée en ce que** les crochets (54) ou les dents de la structure en forme de crochets ou de dents sont conçus de manière élastique souple.

10. Couverture de protection à longueur variable selon la revendication 9, **caractérisée en ce que** les crochets de la structure en forme de crochets ou de dents sont conçus en tant qu'ardillons élastiques (54).

11. Couverture de protection à longueur variable selon la revendication 9 ou 10, **caractérisée en ce que** des évidements (50) sont prévus dans les branches (16) dans la zone située derrière au moins une partie des structures en forme de crochets ou de dents (48), de sorte que les bords (42, 46) des évidements (36) présentent une souplesse élastique avec les structures en forme de crochets ou de dents (48).

12. Couverture de protection à longueur variable selon l'une quelconque des revendications précédentes, **caractérisée en ce que** la structure en forme de crochets ou de dents présente au moins un élément mobile qui s'encliquette après l'enfichement dans une position de verrouillage ou est mobile dans une position de verrouillage.

13. Couverture de protection à longueur variable selon la revendication 11, **caractérisée en ce que** l'élément mobile est conçu séparément de la branche et peut être inséré dans la poche après l'enfichement de la branche.

14. Couverture de protection à longueur variable selon l'une quelconque des revendications précédentes, **caractérisée en ce qu'**un seul soufflet (12) s'étend en tant qu'élément de soufflet sur toute la longueur et la largeur de la couverture de protection (10) et forme le seul élément de connexion des lamelles (14) entre elles.

15. Couverture de protection à longueur variable selon l'une quelconque des revendications précédentes, **caractérisée en ce qu'**au moins un élément de soufflet est prévu en tant que limitation d'extraction.
